# EUROPÄISCHE PATENTSCHRIFT

(11) **EP 2 550 133 B1**
(45) Veröffentlichungstag und Bekanntmachung des Hinweises auf die Patenterteilung: **24.06.2015**
(21) Anmeldenummer: 10710342.6
(22) Anmeldetag: 25.03.2010
(51) Int. Cl.: B24D 5/12, B24D 18/00, B23D 61/18, B28D 1/12

(54) **SEGMENTTRENNSCHEIBE**
SEGMENTED CUTTING DISC
MEULE DE TRONÇONNAGE SEGMENTÉE

(43) Veröffentlichungstag der Anmeldung: 30.01.2013
(73) Patentinhaber: Rhodius Schleifwerkzeuge GmbH & Co. KG, 56659 Burgbrohl (DE)
(72) Erfinder: JUNG, Michael, 56379 Doernberg (DE)
(74) Vertreter: Braun-Dullaeus, Karl-Ulrich
(86) Internationale Anmeldenummer: PCT/EP2010/053949
(87) Internationale Veröffentlichungsnummer: WO 2011/116827

(56) Entgegenhaltungen:
- WO-A1-96/20069
- WO-A1-2006/112670
- AT-B- 350 950
- DE-A1- 3 504 343
- US-A- 5 016 498

## Beschreibung

Die Erfindung betrifft eine segmentierte Trennscheibe, insbesondere eine Diamanttrennscheibe, mit einem Stammblatt und mit über den Umfang des Stammblattes verteilten Schneidsegmenten, wobei das Stammblatt eine mittlere Schnittebene definiert und wobei zwischen zwei Schneidsegmenten jeweils eine Segmentlücke verbleibt. Die Erfindung betrifft zudem Verfahren zur Herstellung einer solchen Trennscheibe und besondere Einsatzmöglichkeiten.

Derartige Trennscheiben sind in großer Vielfalt allgemein bekannt. Als DiamantTrennscheiben besitzen sie eine besonders hohe Standzeit und Schnittfreudigkeit. Die hohe Standzeit wird vor allem durch auf den Schneiden der Schneidsegmenten aufgebrachten Industriediamanten erreicht. Die meisten Diamanttrennscheiben haben einen Metallgrundkörper, das sogenannte Stammblatt, und mehrere Schneidsegmente, die den Schleifbesatz in Form von Industriediamanten tragen. Dabei trägt die mehr oder weniger große Segmentierungen vor allem zur Abkühlung des Werkzeuges bei. Diamanttrennscheiben werden insbesondere zur Bearbeitung von Beton und Naturstein eingesetzt. Für die Bearbeitung faseriger Kunststoffe sind sie bislang nur bedingt einsatzfähig, da sich beim Schneiden derartiger Werkstoffe ohne Kühlflüssigkeit die Diamantscheibe verstärkt zusetzen.

Bislang bekannte Trennscheiben haben eine durch die Stärke des Stammblattes respektive der Schneidsegmente definierte Schnittbreite, die auf den Bereich von wenigen Millimetern begrenzt ist. Für das Schneiden breiterer Kerben, insbesondere von mehr als 5 mm Breite, sind die bekannten Trennscheiben kaum geeignet. Statt dessen müssen dazu Fräswerkzeuge genutzt werden. Im Verhältnis zu Trennscheiben sind Fräswerkzeuge jedoch teuer in der Anschaffung und in der Handhabung nicht besonders einfach.

Die DE 3504343 A1 betrifft Sägeblätter für die Zerspanung von Natursteinen. An einem Stammblatt sind mehrere auf dessen Umfang verteilte Schneidsegmente angeordnet. Zur Erhöhung der Schnittgeschwindigkeit bzw. zur Verringenung des Stammblattdurchmessers wird die Breite der Schneidsegmente gleich 1/n der Breite des Stammblattes zuzüglich des Freischnittes gewählt, wobei n gleich 2 oder größer ist und die unmittelbar hintereinanderliegenden Schneidsegmente jeweils um etwa ihre Breite radial versetzt zueinander angeordnet sind.

Die WO 96/20069 A1 betrifft ein segmentiertes Schneidwerkzeug. Zur Vergrößerung der Härte sind Abschnitte der Seiten der Segmente gehärtet.

Die Aufgabe der vorliegenden Erfindung liegt nunmehr darin, eine Trennscheibe für neue Einsatzzwecke vorzuschlagen. Zudem ist es Aufgabe der Erfindung ein einfach umzusetzendes Verfahrens zur Herstellung einer solchen Trennscheibe zu schaffen und besondere Einsatzzwecke anzugeben.

Diese Aufgaben werden durch die Trennscheibe mit den Merkmalen des Anspruch 1 und das Verfahren nach Anspruch 10 und die Verwendung nach Anspruch 12 gelöst. Vorteilhafte Ausführungsformen sind in den jeweiligen Unteransprüchen genannt.

Während bei den bekannten Trennscheiben die Schneiden der Schneidsegmente meist in der mittleren Schnittebene liegen, ist es der wesentliche Grundgedanke der Erfindung, einzelne oder alle Schneidsegmente der segmentierten Trennscheibe so anzuordnen, dass ihre Schneide respektive Schnittkante bezüglich der mittleren Schnittebene etwas versetzt ist. Dabei kann "Versatz" bedeuten, dass die Schneiden gegenüber der mittleren Schnittebene parallel versetzt und/oder in einem Winkel gegenüber der mittleren Schnittebene angeordnet sind.

Ein solcher Versatz lässt sich durch nachträgliches "Verbiegen" der Schneidsegmente einer ansonsten ebenen Trennscheibe erreichen. Alternativ können auch Schneidsegmente in der gewünschten Anordnung und Ausrichtung an Scheiben beispielsweise mit einem Laser angeschweißt werden. Diese angeschweißten Segmente können in sich eine entsprechende Form haben, so dass sich der Versatz aus der Ebene heraus ergibt. Dabei werden für zwei unterschiedliche Einsatzzwecke entsprechend zwei unterschiedliche Arten von Trennscheiben vorgeschlagen:

Bei der einen ersten Art, die für das plane Abschleifen großer Flächen, wie Böden, vorgesehen ist, werden die Schneiden respektive die Schneidsegmente nur in eine Richtung aus der Schnittebene heraus geführt. Bei der zweiten Art, die für das Schneiden von Schlitzen nutzbar ist, wird die Schnittbreite dadurch vergrößert, dass die Schneiden respektive die Schneidsegmente in mindestens zwei Ebenen, insbesondere beidseitig der ursprünglichen Schnittebene liegen. Dabei ist es gerade bei der zweiten Art zur Vermeidung von Unwuchten besonders vorteilhaft, wenn das Versetzen in Symmetrie bezüglich der mittleren Schnittebene geschieht.

Bei der ersten Art sind somit die Schneiden der versetzten Schneidsegmente bezüglich der mittleren "Schnittebene", also der mittleren Scheibenebene, lediglich in eine Richtung versetzt. In dieser Ausführungsform ist es vorteilhaft, dass alle Schneiden in die eine Richtung aus der mittleren Scheibenebene heraus gebogen sind, da alle Schneiden zum schleifenden Effekt des Werkzeugs beitragen sollen. Zur Vergrößerung der Schleiffläche, können die Schneidsegmente in S-Form gebogen sein, so dass die Enden der Schneidsegmente mit ihren Seitenflächen parallel zur Scheibenebene angeordnet sind. Dabei ist es besonders vorteilhaft, wenn die Schneidsegmente so lang ausgebildet sind und so weit aus der mittleren Scheibenebene heraus gebogen sind, dass sie den Aufnahmekopf der Schleifmaschine, in den die Scheibe eingespannt ist, glockenartig überragen. Auf diese Weise ist eine plane Bearbeitung der Oberfläche ermöglicht.

Bezüglich der ersten Ausführungsform ist es vorteilhaft, wenn unterschiedliche Größen von Schleifscheiben vorgesehen werden, die sich in der Aufnahme der Maschine zu einer größeren Fläche ergänzen lassen. Generell eignet sich diese erste Ausführungsform besonders gut zum Schleifen von Böden um beispielsweise Unebenheiten im Boden oder Bodenbelagsreste, wie Kleber, auf dem Estrich zu beseitigen. Dabei können auf handelsübliche Bodenschleifmaschinen bis zu drei Scheiben ineinander respektive nebeneinander eingesetzt werden.

Ein wesentlicher Vorteil der zweiten Ausführungsform der Trennscheibe mit der versetzten Anordnung einzelner Schneidsegmente liegt in der Vergrößerung der Schnittbreite, die je nach Anordnung das Mehrfache betragen kann. Auf diese Weise können mit den Trennscheiben Schlitze gemacht werden, für die bislang noch ein Fräswerkzeug oder das manuelle Herausarbeiten des Materials zwischen den Schnitten nötig war. Damit werden durch die Reduzierung auf einen, vollständig maschinellen Arbeitsgang Kosten gespart und die Anfertigung solcher Schlitze vereinfacht. Die vergrößerte Schnittbreite bietet zudem eine besseren Kühleffekt und einen Schutz gegen sich zusetzende Segmentlücken. Aus diesem Grund können mit den Trennscheiben auch Materialien geschnitten werden, die vorher dieser Art von Bearbeitung nicht zugänglich waren. So hat es sich herausgestellt, dass beispielsweise sogar Faserwerkstoffe wie Kunststoff, sonst für bekannte Trennscheiben ein besonders problematisches Material, nunmehr problemlos geschnitten werden können.

Ganz generell lässt sich dieses "Versetzen" der Schnittkanten bei jeglichen Größen von Trennscheiben vorsehen. Es lässt sich besonders vorteilhaft für Trennscheiben der Größe zwischen 100 mm und 600 mm einsetzen, die eine entsprechende Zahl von Schneidsegmenten aufweisen.

Im Hinblick auf eine besonders einfache Herstellung ist es vorteilhaft, wenn der Versatz in einem Auslenken der Schneidsegmente aus der mittleren Schnittebene heraus bewerkstelligt wird, so dass die Schneiden respektive die Schnittkanten der Schneidsegmente bezüglich der mittleren Schnittebene um eine gewisses Versatzmaß parallel versetzt sind. Vorteilhafterweise besteht das Auslenken in einer Biegung der die Schneiden tragenden Schneidsegmente aus der mittleren Schnittebene heraus, wobei eine zusätzliche Biegung der Schneidsegmente in sich vorgesehen sein kann. Diese Art der Fertigung lässt sich für beide Ausführungsformen einsetzen.

Bezüglich der zweiten Ausführungsform ist es vorteilhaft, wenn nicht nur ein paar ausgewählte, sondern alle Schneiden insofern versetzt zueinander angeordnet, als die Schneiden jeweils benachbarter Schneidsegmente in unterschiedlichen Schnittebenen liegen. Solcherart ausgestaltete Trennscheiben bieten die höchste Sicherheit gegen Überhitzung und sich zusetzender Segmentlücken. Wie auch immer der Versatz gestaltet ist, so ist es besonders vorteilhaft wenn nicht sogar unerlässlich, dass die Schnittkanten der über den Umfang verteilten Schneidsegmente bezüglich der Schnittbreite insofern lückenlos angeordnet sind, als alle Schnittkanten in Summe die komplette Schnittbreite ausfüllen. Das ist notwendig, damit beim Schneiden nicht ein Steg im Schnitt stehen bleibt, der von keinem der Schneidsegmente weg geschliffen wird.

Eine besonders vorteilhafte Gestaltung des Versatzes bezüglich der zweiten Ausführungsform ist es, wenn die Schnittebenen und damit die Schneiden der Schneidsegmente insofern verschränkt angeordnet sind, als die Schnittebenen wechselweise einmal unter und einmal über der mittleren Schnittebene liegen, wobei die Erfindung eine zusätzliche Anstellung der Schneiden der versetzten Schneidsegmente in einem Winkel gegenüber der mittleren Schnittebene vorsieht. Mit einem solchen verschränkten Versatzmuster lässt sich die Schnittbreite einer segmentierten Trennscheibe unter der Voraussetzung des Verbleibes eines minimalen Überlapps im Prinzip nahezu verdoppeln. Eine weitere Vergrößerung der Schnittbreite ist dadurch möglich, dass die Schneiden der Schneidsegmente in mehr als zwei Schnittebenen beispielsweise stufenförmig angeordnet und/oder etwas angestellt sind. Mit drei Stufen ließe sich entsprechend eine nahezu dreifache Schnittbreite erzielen, wobei nicht zwangsläufig eine stufige Anordnung gewählt werden muss.

Nachfolgend wird die Erfindung anhand der Figuren 1 bis 5 näher erklärt. Es zeigen
- **Figur 1**: eine Aufsicht auf eine Trennscheibe,
- **Figur 2:**: Schnitte entlang der Schnittkante,
- **Figur 3:**: eine Prägeform für die Fertigung der Trennscheibe,
- **Figur 4:**: eine zwischen Prägeform und Stempel gepresste Trennscheibe,
- **Figur 5:**: eine Prägeform in Verbindung mit einem vorteilhaften Stempel und
- **Figur 6:**: eine eingespannte Trennscheibe der ersten Ausführungsform.

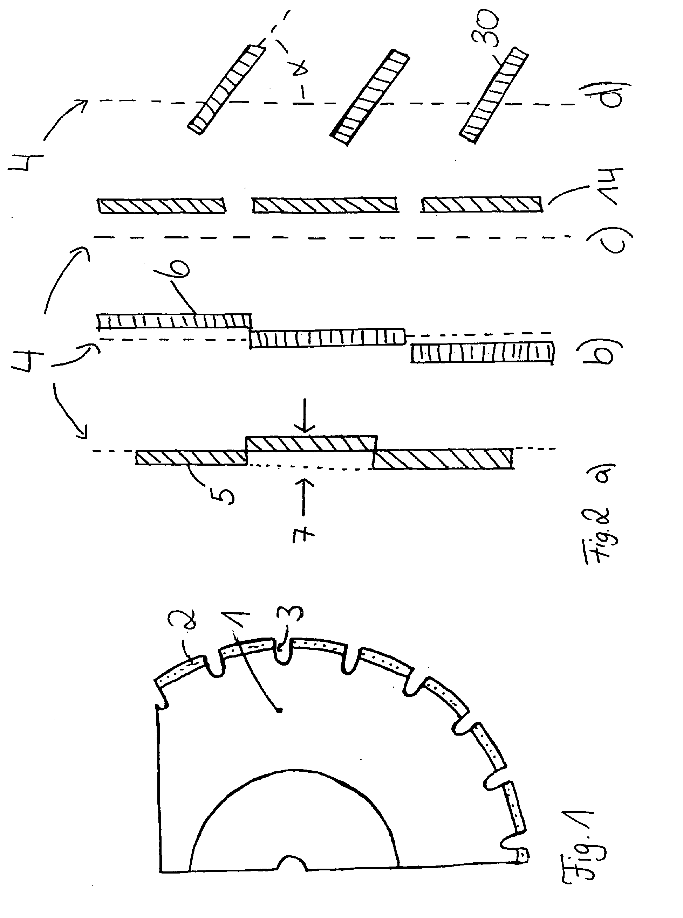

In Figur 1 ist ein Ausschnitt einer segmentierten Diamanttrennscheibe gezeigt, die ein zentrales Stammblatt 1 aus gehärtetem Stahl und über den Umfang des Stammblattes 1 verteilte Schneidsegmente 2 aufweist. Die Schneidsegmente 2 sind diamantbesetzt und mittels eines geeigneten Schweißverfahrens auf den Umfang aufgebracht. Die Scheibe kann aber auch aus einem einzelnen Stück bestehen und mittels Laser oder Stanzen aus einem Blech ausgeschnitten werden. Zwischen den Schneidsegmente 2 besteht jeweils eine Segmentlücke 3, die bis in das Stammblatt 1 hinein reicht. Die Mittelebene des Stammblattes definiert eine mittlere Schnittebene ("0-Linie") 4, die in Figur 2 als unterbrochene Linie dargestellt ist.

Wie aus den Figuren 2a, 2b, 2c und 2d (Die Figuren 2a bis 2c betreffen nicht beanspruchte Ausgestaltungen) ersichtlich ist, sind die Schneiden 5 der Schneidsegmente bezüglich der mittleren Schnittebene 4 versetzt angeordnet. Dabei sind die Schneiden 5 der Schneidsegmente nach Figur 2a insofern verschränkt angeordnet, als ihre Schneiden 5 wechselweise rechts und links der unterbrochene Linie und damit unter und über der mittleren Schnittebene liegen. Hingegen sind die Schneiden 6 der Schneidsegmente nach Figur 2b in drei Schnittebenen stufenförmig angeordnet, wobei die mittlere Schneide 6a in der mittleren Schnittebene 4 liegt und die beiden anderen Schneiden links und rechts daneben. Bei beiden Ausführungsformen nach den Figuren 2a und 2b liegen die Schneiden der Schneidsegmente in unterschiedlichen Schnittebenen und weisen bezüglich der mittleren Schnittebene einen parallelen Versatz auf. Zudem sind die Schneiden der über den Umfang verteilten Schneidsegmente bezüglich der Schnittbreite 7 lückenlos angeordnet. D.h., dass die Schnittebenen unmittelbar an der "0-Linie" liegen respektive eine kleine Überlappung aufweisen. Figur 2c zeigt eine Trennscheibe der ersten Ausführungsform, bei der die Schneiden 14 der Schneidsegmente alle auf derselben Seite der

Schnittebene 4 angeordnet. Figur 2d zeigt eine erfindungsgemäße Ausführungsform mit um einen Winkel α angestellten Schneiden 30.

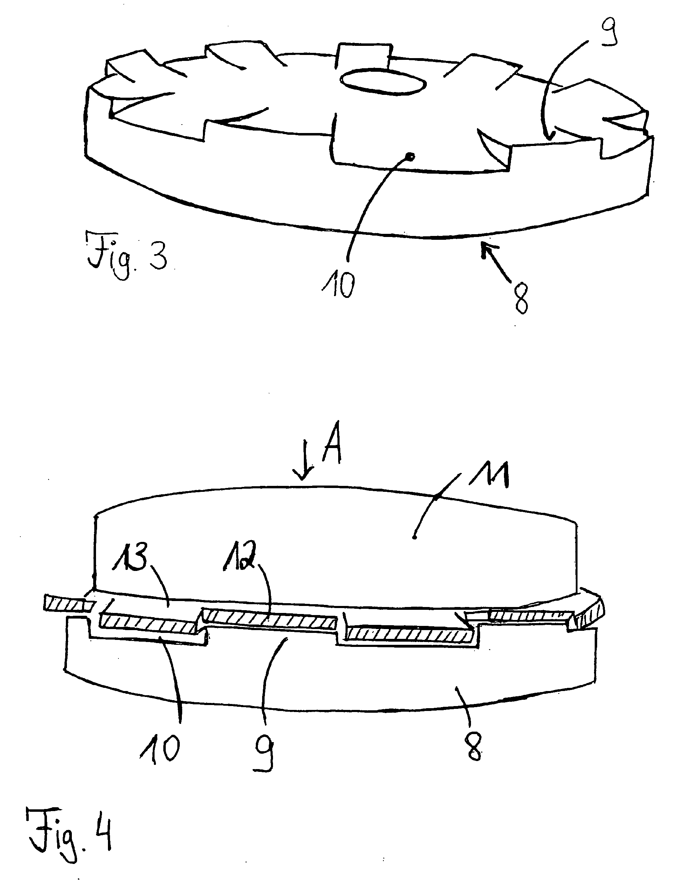

Um diesen Versatz zu schaffen, sind die Schneiden der Schneidsegmente nach dem nachfolgend zu beschreibenden Verfahren aus der mittleren Schnittebene herausgebogen. Als Grundlage des Verfahrens dient eine Prägeform 8, die in dem Beispiel nach Figur 3 kreisrund ist und über den Umfang verteilte und schanzenartig nach oben ragende Biegeauflagen 9 aufweist. Zwischen den Biegeauflagen 9 verbleibt ein Zwischenraum 10 ähnlicher Breite. Bei der Fertigung wird eine Trennscheibe flächig derart auf die Prägeform 8 aufgelegt, dass jedes zweite Schneidsegment auf einer der 9 Biegeauflagen aufliegt. Die anderen Schneidsegmente überragen bei der noch nicht verformten Trennscheibe die Zwischenräume.

Wie in Figur 4 gezeigt, wird die aufgelegte Trennscheibe nachfolgend in einem Pressvorgang von einem Stempel 11 in Richtung des Pfeils A gegen die Prägeform 8 druckbeaufschlagt, so dass die Trennscheibe als Ganzes nach unten auf die Prägeform 8 gepresst wird, während die auf den Biegeauflagen 9 aufliegenden Schneidsegmente 12 "oben" verbleiben. Die anderen Schneidsegmente 13 werden in den jeweiligen Zwischenraum 10 eingedrückt.

Um die in diesem Schritt noch nicht gebogenen Schneidsegmente 13 ebenfalls auszulenken, wird die einseitig gebogene Trennscheibe aus dem Werkzeug heraus genommen, umgekehrt eingelegt und entsprechend druckbeaufschlagt. Dieser Schritt kann vermieden werden, wenn der Stempel quasi als Pendant zur Prägeform ausgebildet wird und in entgegengesetzter Richtung erhabene Biegeauflagen aufweist, die beim Pressvorgang in die Zwischenräume zwischen jeweils zwei Biegeauflagen der Prägeform eingreifen.

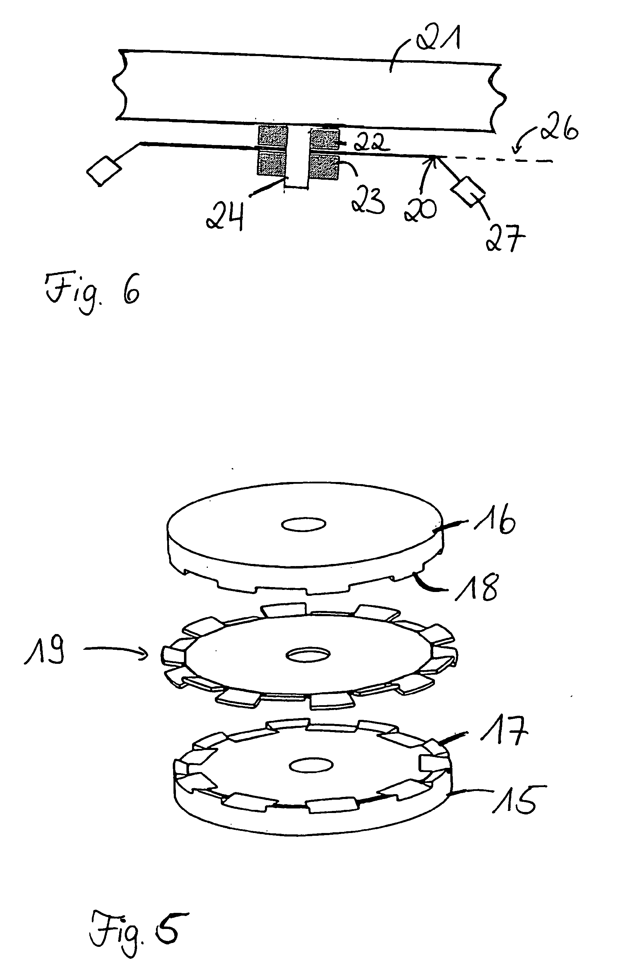

In der vorteilhaften Verfahrensweise (Figur 5) sind Prägeform 15 und Stempel 16 insofern gleichartig ausgebildet, dass beide Teile schanzenartig nach oben 17 respektive nach unten 18 ragende Biegeauflagen aufweisen. Die Schneidsegmente einer dazwischen gelegten Trennscheibe werden in einem einzigen Pressvorgang in beide Richtungen gebogen, so dass nur ein Fertigungsschritt nötig ist, um die Trennscheibe 19 herzustellen. Auf diese Weise lässt sich auch eine winkelige Anstellung der Schneidsegmente erzeugen.

In Figur 6 ist nunmehr eine Trennscheibe 20 der ersten Art gezeigt, die in die Aufnahme 21 einer Maschine eingespannt ist. Die Spannvorrichtung hat ein Distanzstück 22 und eine Mutter 23, mittels derer die Trennscheibe 20 auf der Welle 24 gehalten ist. Die Schneidsegmente 25 sind bezüglich der "0-Linie" 26 glockenartig nur in eine Richtung, hier nach unten, ausgelenkt, wobei die Länge der Schneidsegmente 25 und der Auslenkwinkel so bemessen sind, dass die Schneiden 27 in einer Ebene unterhalb des Kopfes der Welle 24 angeordnet sind. Die gesamte Spannvorrichtung ist somit glockenartig überstülpt.

## Patentansprüche

1. Segmentierte Trennscheibe, insbesondere Diamanttrennscheibe, mit einem Stammblatt (1) und mit über den Umfang des Stammblattes (1) verteilten Schneidsegmenten (2), wobei das Stammblatt (1) eine mittlere Schnittebene (4) definiert und wobei zwischen zwei Schneidsegmenten (2) jeweils eine Segmentlücke (3) verbleibt, wobei Schneiden von Schneidsegmenten (2) bezüglich der mittleren Schnittebene (4) versetzt angeordnet sind,
**dadurch gekennzeichnet, dass** die Schneiden der versetzten Schneidsegmente (2) gegenüber der mittleren Schnittebene (4) derart angestellt sind, dass die Schneiden in einem Winkel zur mittleren Schnittebene (4) angeordnet sind.

2. Trennscheibe nach Anspruch 1,
**dadurch gekennzeichnet, dass** die Schneiden der versetzten Schneidsegmente (2) bezüglich der mittleren Schnittebene (4) lediglich in eine Richtung versetzt sind.

3. Trennscheibe nach Anspruch 2,
**dadurch gekennzeichnet, dass** die Schneiden aller Schneidsegmente (2) bezüglich der mittleren Schnittebene (4) in diese eine Richtung versetzt sind.

4. Trennscheibe nach Anspruch 3,
**dadurch gekennzeichnet, dass** die Schneiden aller Schneidsegmente (2) bezüglich der mittleren Schnittebene (4) so weit in diese eine Richtung versetzt sind, dass sie den Aufnahmekopf einer Schleifmaschine überragen.

5. Trennscheibe nach einem der vorherigen Ansprüche,
**dadurch gekennzeichnet, dass** die Schneiden der versetzten Schneidsegmente (2) bezüglich der mittleren Schnittebene (4) einen parallelen Versatz aufweisen.

6. Trennscheibe nach einem der vorherigen Ansprüche,
**dadurch gekennzeichnet, dass** die Schneidsegmente (2) zur Schaffung des Versatzes der Schneiden aus der mittleren Schnittebene (4) herausgebogen sind.

7. Trennscheibe nach einem der vorherigen Ansprüche,
**dadurch gekennzeichnet, dass** die Schneiden jeweils benachbarter Schneidsegmente (2) in unterschiedlichen Schnittebenen liegen.

8. Trennscheibe nach Anspruch 7,
**dadurch gekennzeichnet, dass** die Schnittebenen der Schneidsegmente (2) insofern verschränkt angeordnet sind, als ihre Schnittebenen insbesondere wechselweise unter und über der mittleren Schnittebene (4) liegen.

9. Trennscheibe nach Anspruch 7,
**dadurch gekennzeichnet, dass** die Schneiden der Schneidsegmente (2) in mehr als zwei Schnittebenen insbesondere stufenförmig angeordnet sind.

10. Verfahren zur Herstellung einer Trennscheibe nach einem der vorherigen Ansprüche,
**dadurch gekennzeichnet,**
**dass** eine Trennscheibe, deren Schneidsegmente (2) zunächst in der mittleren Schnittebene (4) liegen, derart auf eine Prägeform (8) aufgelegt wird, dass Schneidsegmente (2) auf Biegeauflagen (8) der Prägeform (8) aufliegen, dass die Trennscheibe durch einen Stempel (11) in einem Pressvorgang gegen die Prägeform (8) druckbeaufschlagt wird.

11. Verfahren nach Anspruch 10,
**dadurch gekennzeichnet, dass** der Stempel (11) in entgegengesetzter Richtung erhabene Biegeauflagen aufweist, die beim Pressvorgang zwischen jeweils zwei Biegeauflagen der Prägeform (8) eingreifen.

12. Verwendung einer Trennscheibe nach einem der Ansprüche 7 bis 9 zum Schneiden von Schlitzen in hartem Material, insbesondere in Betonflächen.

## Claims

1. Segmented cutting disc, in particular diamond cutting disc, having a main blade (1) and cutting segments (2) distributed over the circumference of the main blade (1), wherein the main blade (1) defines a mean cutting plane (4) and wherein between two cutting segments (2) a respective segment gap (3) remains,
wherein the blades of cutting segments (2) are arranged offset with respect to the mean cutting plane (4),
**characterized in**
**that** the blades of the offset arranged cutting segments (2) are pitched with respect to the mean cutting plane (4) in that way, that the blades are arranged angled with respect to the mean cutting plane (4).

2. Cutting disc according to claim 1,
**characterized in**
**that** the blades of the offset arranged cutting segments (2) are offset relative to the mean cutting plane (4) merely in one direction.

3. Cutting disc according to claim 2,
**characterized in**
**that** the blades of all cutting segments (2) are offset relative to the mean cutting plane (4) in this one direction.

4. Cutting disc according to claim 3,
**characterized in**
**that** the blades of all cutting segments (2) are offset relative to the mean cutting plane (4) at a certain extent, so that they exceed a supporting head of a grinding machine.

5. Cutting disc according to one of the preceding claims,
**characterized in**
**that** the blades of the offset arranged cutting segments (2) having a parallel offset with respect to the mean cutting plane (4).

6. Cutting disc according to one of the preceding claims,
**characterized in**
**that** for establishing the offset of the blades the cutting segments (2) are bent out of the mean cutting plane (4).

7. Cutting disc according to one of the preceding claims,
**characterized in**
**that** the blades of respectively adjacent cutting segments (2) are located in different cutting planes.

8. Cutting disc according to claim 7,
**characterized in**
**that** the cutting planes of the cutting segments (2) are arranged entangled in that way, that their cutting planes are in particular alternately located below and above the mean cutting plane (4).

9. Cutting disc according to claim 7,
**characterized in**
**that** the blades of the cutting segments (2) are arranged in more than two cutting planes in particular in a stepped manner.

10. A method for manufacturing a cutting disc according to one of the preceding claims,
**characterized in**
**that** a cutting disc, which cutting segments (2) at first lie in the mean cutting plane (4), are applied on a stamping die (8) in such way, that cutting segments (2) come to rest on bending supports (8) of the die (8), that cutting disc is pressurized by a plunger (11) in a press cycle against the stamping die (8).

11. The method according to claim 10,
**characterized in**
**that** the plunger (11) comprises bending supports raised in the opposite direction, which engage during punching between two respective bending supports of the stamping die (8).

12. Use of a cutting disc according to one of claims 7 to 9 for cutting slots in hard material, in particular in concrete surfaces.

## Revendications

1. Disque de coupe segmenté, en particulier disque de coupe en diamant, comprenant une lame de base (1) et des segments de coupe (2) répartis sur le pourtour de la lame de base (1), sachant que la lame de base (1) définit un plan de coupe médian (4) et sachant qu'il reste au moins un espace de segment (3) entre deux segments de coupe (2), sachant que des couteaux des segments de coupe (2) sont disposés décalés par rapport au plan de coupe médian (4), **caractérisé en ce que** les couteaux des segments de coupe décalés (2) sont ainsi faits par rapport au plan de coupe médian (4) que les couteaux sont disposés dans un angle par rapport au plan de coupe médian (4).

2. Disque de coupe selon la revendication 1, **caractérisé en ce que** les couteaux des segments de coupe décalés (2) sont décalés uniquement dans une direction par rapport au plan de coupe médian (4).

3. Disque de coupe selon la revendication 2, **caractérisé en ce que** les couteaux de tous les segments de coupe (2) sont décalés dans cette direction même par rapport au plan de coupe médian (4).

4. Disque de coupe selon la revendication 3, **caractérisé en ce que** les couteaux de tous les segments de coupe (2) sont décalés si loin dans cette direction même par rapport au plan de coupe médian (4), qu'ils dépassent de la tête de réception d'une meuleuse.

5. Disque de coupe selon l'une des revendications précédentes, **caractérisé en ce que** les couteaux des segments de coupe décalés (2) présentent un décalage parallèle par rapport au plan de coupe médian (4).

6. Disque de coupe selon l'une des revendications précédentes, **caractérisé en ce que** les segments de coupe (2) sont obliques hors du plan de coupe médian (4) pour créer le décalage des couteaux.

7. Disque de coupe selon l'une des revendications précédentes, **caractérisé en ce que** les couteaux de segments de coupe (2) voisins respectifs reposent dans des plans de coupe différents.

8. Disque de coupe selon la revendication 7, **caractérisé en ce que** les plans de coupe des segments de coupe (2) sont disposés en croix de sorte que leurs plans de coupe reposent en particulier en-dessous et au-dessus réciproquement du plan de coupe médian (4).

9. Disque de coupe selon la revendication 7, **caractérisé en ce que** les plans de coupe des segments de coupe (2) sont disposés dans plus de deux plans de coupe, en particulier de façon étagée.

10. Procédé de fabrication d'un disque de coupe selon l'une des revendications précédentes, **caractérisé en ce qu'**un disque de coupe, dont les segments de coupe (2) reposent d'abord dans le plan de coupe médian (4), est ainsi placé sur un moule d'empreinte (8), que les segments de coupe (2) reposent sur des appuis de flexion (8) du moule d'empreinte (8), que le disque de coupe est comprimé contre le moule d'empreinte (8) par un poinçon (11) au cours d'un pressage.

11. Procédé selon la revendication 10, **caractérisé en ce que** le poinçon (11) présente des appuis de flexion en relief dans un sens opposé, qui se mettent en prise entre respectivement deux appuis de flexion du moule d'empreinte (8) lors du pressage.

12. Emploi d'un disque de coupe selon l'une des revendications 7 à 9 pour découper des fentes dans du matériau dur, en particulier dans des surfaces de béton.
